# EUROPÄISCHE PATENTSCHRIFT

(11) **EP 1 293 515 B1**
(45) Veröffentlichungstag und Bekanntmachung des Hinweises auf die Patenterteilung: **11.04.2007**
(21) Anmeldenummer: 02019171.4
(22) Anmeldetag: 02.09.2002
(51) Int. Cl.: C08B 17/06, C08B 11/193

(54) **Verfahren und Vorrichtung zur industriellen Herstellung von Methylhydroxyalkylcellulose**
Process and apparatus for industrially producing methyl hydroxyalkyl cellulose
Procédé et appareillage pour la production industrielle d'éther méthylhydroxyalkyle de cellulose

(30) Priorität: 14.09.2001 DE 10145408; 29.07.2002 DE 10234426
(43) Veröffentlichungstag der Anmeldung: 19.03.2003
(73) Patentinhaber: Wolff Cellulosics GmbH & Co.KG, 29656 Walsrode (DE)
(72) Erfinder: Holtkötter, Torsten, Dr., 29664 Walsrode (DE); Michel, Stefan, Dr., 29664 Walsrode (DE); Sonnenberg, Gerd, 29664 Walsrode (DE)
(74) Vertreter: Lütjens, Henning

(56) Entgegenhaltungen:
- EP-A- 0 236 892
- GB-A- 1 166 060
- US-A- 4 015 067
- DATABASE WPI Week 197002 Derwent Publications Ltd., London, GB; AN 1970-02601r XP002226093 "Cellulose digester with wasching apparatus." & CA 831 753 A (AB KAMYR)
- DATABASE WPI Week 199604 Derwent Publications Ltd., London, GB; AN 1996-038934 XP002226094 "Process and appts. for fluidising flockedcellulosic pulp suspension mixt. with process additives - using rotor unit comprising coaxial inner and outer cylindrical cages provided with rotating bars" & SE 9 401 144 A (KVAERNER PULPING AB), 7. Oktober 1995 (1995-10-07)

## Beschreibung

Die vorliegende Erfindung betrifft ein Verfahren und eine Vorrichtung zur industriellen Herstellung von Methylhydroxyalkylcellulosen (nachfolgend MHAC genannt), vorzugsweise Methylhydroxyethylcellulose (MHEC) und Methylhydroxypropylcellulose (MHPC).

Es ist bekannt, dass MHAC und ihre genannten Mischether in einem mehrstufigen Prozess hergestellt werden. In der ersten Stufe wird der eingesetzte Zellstoff schonend auf ein gewünschtes Teilchengrößenspektrum gemahlen. In der zweiten Stufe wird der gemahlene Zellstoff mit einer konzentrierten wässerigen Lösung eines Alkalihydroxids, insbesondere Natriumhydroxid, in einem Mischer innig vermengt und zur Alkalicellulose aktiviert. Diese Vorbehandlung ist entscheidend für die Eigen schaften der resultierenden Celluloseether. Die bekannten Verfahren sind die Sprühalkalisierung in einem geeigneten Mischaggregat, bei der der gemahlene Zellstoff mit Alkalilösung besprüht wird. Beim Slurry-Verfahren wird der gemahlene Zellstoff in einem Nicht-Lösungsmittel aufgeschlemmt und dann das Alkali zugegeben. Die Alkalisierung im Slurry verläuft gleichmäßiger und man erreicht gleichmäßiger substituierte Produkte. Beim Maisch-Alkalisierverfahren wird der Zellstoff in Natronlauge aufgeschlemmt und anschließend durch Schneckenpressen oder Siebtrommelpressen geführt.

In der dritten Stufe erfolgt die heterogene Reaktion mit Veretherungsmitteln mit dem Halogenid des anzulagernden Alkylrest wie Methylchlorid und den Hydroxyalkylierungsmitteln wie Ethlyenoxid und/oder Propylenoxid. Die Reaktion ist exotherm und verläuft unter Druck. Die verfahrenstechnische Reaktionsfolge kann so durchgeführt werden, dass teilweise alkalisiert, dann teilweise verethert, wieder teilweise alkalisiert bzw. verethert usw. wird.

Die Schwierigkeit besteht darin, dass die Alkalisierung und Veretherung als exotherme Reaktionsstufen mit erheblicher Freisetzung von Wärme, gleichzeitigem Druckanstieg verbunden sind. Ferner besteht die Gefahr, dass durch unkontrollierte Temperaturspitzen ein Molekulargewichtsabbau bei der Cellulose erfolgt.

Ferner ist bei einem industriellen Herstellverfahren wegen der Wirtschaftlichkeit eine hohe Raum-Zeit-Ausbeute der Reaktion erforderlich, die einen hohen Durchsatz bei gleichzeitig einheitlichem Substitutionsmuster, gekennzeichnet durch den durchschnittlichen Substitutionsgrad Methyl DS(M) und den durchschnittlichen molaren Substitutionsgrad Hydroxyalkyl MS(HAC) für die Methyl- bzw. Hydroxyalkylsubstitution liefert.

Über den Grad der Veretherung und die Art der Substituenten werden verschiedene Eigenschaften der Produkte eingestellt, wie z.B. der thermische Flockpunkt, die Löslichkeit, die Viskosität, das Filmbildevermögen und die Klebkraft.

Die weiteren Prozessstufen beinhalten die Reinigung der Celluloseether, die Mahlung und Trocknung.

Die Herstellung von Celluloseethern, ihre Eigenschaften und Anwendungen werden allgemein beschrieben in:
Ullmann's Encyclopedia Of Industrial Chemistry, 5^{th} Edition 1986, Volume A5,461-488, VCH Verlagsgesellschaft, Weinheim, Encyclopedia OF Polymer Science and Engineering, 2 Edition 1985, Volume 3, 226-269.

Es ist bekannt aus der DE-A-2 635 403, dass man Celluloseether ohne Einsatz getrennter Reaktionsgefäße für die Herstellung der Alkalicellulose bzw. der heterogenen Veretherung als Einstufenverfahren dadurch herstellen kann, dass man in einem Zwangsmischer mit schnelllaufendem Mischwerk, bestehend aus einem Pflugscharmischer mit Zerhackern, im geschlossenen Behälter mit einstellbarem Innendruck und Kühlung der Innenwand des Behälters die Umsetzung des Zellstoffes zum Celluloseether durchführt, wobei die bei der Alkalisierung freiwerdende Reaktionswärme durch die Verdampfung des Alkylhalogenids im wesentlichen absorbiert und das verdampfte Alkylhalogenid an der gekühlten Behälterwand kondensiert wird. Der in der DE-A-2635403 beschriebene Mischbehälter mit einem Bruttovolumen von 20 m³ weist einen Chargenbetrieb von 4 Stunden auf, gerechnet vom Füllen des Reaktors mit gemahlenem Zellstoff bis zum Ende der Entleerung der Methylcellulose mit DS=1,3 bei einem 75 %igen Umsetzungsgrad. Für Ethylcellulose wird in der genannten Schrift ein Reaktor mit einem Bruttovolumen von 25 m³ beschrieben, der es gestattet in 4,5 Stunden eine Ethylcellulose mit einem DS=2,45 bei einem Umsetzungsgrad von 75 % herzustellen. Die maximal erreichbare Kapazität beträgt 6000 jato bei einer Verfügbarkeit von 8400 h/a.

Eine weitere Steigerung der Kapazität und damit der Wirtschaftlichkeit ist mit den in der DE-A-2635403 beschriebenen 20 bzw. 25-m³-Reaktoren nicht möglich.

Der Druck- und Temperaturanstieg bedingt durch den exothermen Reaktionsverlauf können durch die beschriebenen Verfahren nicht beherrscht werden, weil eine genügend schnelle Durchmischung, eine hohe Mischgüte und eine ausreichend große Kühlleistung nach den beschriebenen Verfahren für größere Reaktoren technisch nicht realisiert werden können. Somit stellen die beanspruchten Reaktorgrößen nach dem Stand der Technik eine obere Grenze für die sicher beherrschbaren Reaktionen dar.

Die EP-A- 023692 beschreibt ein Verfahren zur Herstellung von Polysaccharidethern unter Verwendung eines Reaktors mit mehrstufigem Rührorgan und Strombrechern. Der universelle Mischer für unterschiedliche Rohstoffe besteht aus einem Rührkessel mit vertikal zentraler Mischerwelle mit mehrstufigem Rührer und Strombrecher. Die Ausführung ist auf eine einseitig gelagerte Welle beschränkt, demzufolge sind die Drehmomente für das Vermischen der Ausgangs- und Reaktionsprodukte limitiert, was die Kapazität begrenzt.

Die EP-A- 0347653 beschreibt einen Rührkessel mit radial fördernden Rührern und mindestens einem Stromstörer sowie Verfahren zum Durchmischen von Flüssigkeiten mit Hilfe dieses Rührkessels. Die schnelle axiale Vermischung von Flüssigkeiten auch unterschiedlicher Dichten wird durch einen vertikal aufgesetzten zentralen Rührer mit Stromstörern erreicht, die als Tragflächenprofil ausgebildet sind. Auch diese Anordnung ist auf das Konzept einer einseitig gelagerten Welle und damit in der Kapazität beschränkt.

Die EP-A- 0470493 beschreibt einen vertikal aufgestellten Behälter mit zentralem Rührwerk und Stromstörern zur schnellen und gleichmäßigen Vermischung auch hochviskoser Medien. Nachteilig ist das eingeschränkte Drehmoment, das über die einseitig gelagerte Welle eingebracht werden kann und das Volumen der zu vermischenden und zu homogenisierenden Reaktionsprodukte einschränkt. Dies gilt auch für den in der SE 940 1144 A beschriebenen Apparat zum Mischen fest/flüssig oder flüssig/flüssig Stoffen zum Herstellen von Suspensionen, der quer zur Strömungsrichtung ein eingebautes Zerteilungswerkzeug aufweist, das mit unterschiedlichen Drehzahlen betrieben werden kann.

Die US-A-4 199 266 beschreibt eine Apparatur zum Verteilen von scherempfindlichen Feststoffen in einer Flüssigkeit durch eine horizontal eingebaute Welle oder eine schräg sitzende Welle. Gegenüber vertikal angeordneten Mischern ergibt sich eine bessere Durchmischung von Suspensionen, da schwere Teilchen angehoben werden. Nachteilig dieser Anordnung ist das begrenzte Drehmoment, das über die einseitig gelagerte Welle eingetragen werden kann, und die Begrenzung der Durchsatzmengen.

Es ist bekannt, dass bei industriellen Herstellverfahren die Steigerung des Durchsatzes durch Volumenvergrößerung des Reaktors erreicht werden kann. Für die Herstellung von MHAC ergibt sich aber wegen der exothermen Reaktion der Alkalisierung und Veretherung die Notwendigkeit, die Wärme über die Manteloberfläche des Reaktors abzuführen, wie es zum Beispiel in der DE-A-2 635 403 beschrieben ist.

Hierdurch bedingt weisen die Reaktoren des Standes der Technik ein Längen/Querschnittsverhältnis von >2,5 auf.

Die US-A-4015067 beschreibt ein kontinuierliches Verfahren zur Herstellung von Polysaccharidethern, das eine Aufschlämmung aus feinverteiltem Polysaccharid, wässerigem Alkalimetallhydroxid und einem Veretherungsmittel annähernd kontinuierlich in einen Röhrenreaktor (mit schlangenförmig gewundenen Röhren) einführt, der frei von Hindernissen ist, die den Fluss der Aufschlämmung hindern und in welchem die Aufschlämmung durch den Reaktor während der Reaktion geführt wird. Das Längen/Querschnittsverhältnis (L/D) der Röhrenreaktoren liegt bei 5 bis 2000, vorzugsweise bei etwa 100 bis 800. Mit diesem Reaktor könnten gegebenenfalls Kapazitäten von mehr als 6000 jato erreicht werden aber wegen des großen L/D Verhältnisses erweisen sich derartige Röhrenreaktoren bei häufigen Produktwechseln mit unterschiedlichen Substitutionsmustern aufgrund von Produktresten im Reaktor als nachteilig.

Es bestand daher die Aufgabe, MHAC in hoher Wirtschaftlichkeit in einer hohen Menge herzustellen, wobei gewährleistet sein muss, dass die entstehende Reaktionswärme unter Vermeidung lokaler Temperaturspitzen abgeführt, der Druckanstieg sicher beherrscht werden kann, Produktablagerungen beim Produktwechsel weitgehend vermieden werden und die erhaltenen Produkte unter Unterdrückung von Nebenprodukten ein einheitliches Substitutionsmuster aufweisen.

Es wurde nun überraschenderweise festgestellt, dass die gewünschten MHAC Produkte in hoher Qualität und Wirtschaftlichkeit erfindungsgemäß mit einem Reaktor mit einem L/D-Verhältnis kleiner 2,5 durch stufenweise Alkalisierung und Veretherung hergestellt werden können.

Gegenstand der Erfindung ist daher ein industrielles Verfahren zur Herstellung von MHAC, durch Umsetzung von Zellstoff mit Alkalihydroxid und anschließender Umsetzung mit einem Alkylhalogenid und Hydroxyalkylierungsmittel, wobei die Reaktion batchweise in einem Reaktor mit einem L/D-Verhältnis kleiner 2,5 durchgeführt wird, in dem die nicht vermischten Bereiche minimiert sind und dem batchweise betriebenen Reaktor am Eintrag eine kontinuierlich betriebenen Zellstoffmahlung vor- und am Austrag eine kontinuierlich laufende Anlage zur Mahlung und Trocknung der Produkte nachgeschaltet ist, wobei die Produktförderung unter Ausnutzung der Schwerkraft erfolgt.

Überraschenderweise wurde gefunden, dass nur die Kombination einer kontinuierlich arbeitenden Zellstoffmahlanlage, eines batchweise betriebenen Reaktors mit einem L/D-Verhältnis kleiner 2,5 sowie einer kontinuierlich laufenden Anlage zur Mahlung und Trocknung der Produkte eine wirtschaftliche Produktion der MHAC in einer hohen Menge ermöglicht, wobei der Totvolumenanteil minimiert ist. Bevorzugt eignet sich das Verfahren für eine Produktion der MHAC in einer Kapazität von mehr als 6000 jato.

Bevorzugt enthält der Reaktor einen Zwangsmischer mit Mischwerk und mindestens einer horizontal angeordneten Welle, die beidseitig gelagert und besonders bevorzugt beidseitig angetrieben ist, so dass hohe Drehmomente erzielt werden, die zur schnellen und intensiven Vermischung der Edukte führen und eine Verkürzung der Diffusionswege und Vereinheitlichung der Zugänglichkeit der Anhydroglukoseeinheiten für die Veretherung und Alkylierungsreaktion bewirkt. In vorteilhafter Weise wird eine Ableitung der Reaktionswärme gewährleistet, Totvolumenanteile minimiert und Produktablagerungen beim Produktwechsel vermieden.

Die Bestückung des Reaktors mit den Wellen für den Mischantrieb kann dabei so erfolgen, dass eine gegenseitige Reinigung der Wellen möglich ist.

In einer besonderen Ausführungsform können die Wellen auch geteilt sein, so dass durch unterschiedliche Drehrichtung und Drehzahl eine Rückvermischung der Produkte erzielt werden kann.

Zur schnellen Entleerung können sowohl die Drehzahl als auch die Drehrichtung individuell auf das hergestellte Produkt angepasst werden. Darüber hinaus wird eine vollständig Entleerung durch die Zugabe von Flüssigkeiten, vorzugsweise Wasser, gewährleistet. Hiermit wird weiter der Zweck verfolgt, eine Reaktorspülung vorzunehmen mit dem Ziel, dass keine Produktreste im Apparat verbleiben. Durch Auswahl und Anordnung von geeigneten Sprühdüsen wird gewährleistet, dass alle Bereiche einschließlich der Mischwerkzeuge gleichermaßen benetzt und gereinigt werden.

Bevorzugt ist der Reaktor so gestaltet, dass die Abführung der Reaktionswärme durch eine intensive Kühlung der Innenwand und durch mehrere, mit einer Anzahl größer gleich eins, über die Länge des Reaktors symmetrisch verteilte Dampfdome zur Rückflusskühlung durch Kondensation der Dampfphase erfolgt.

Üblicherweise wird das Verfahren ohne Lösungsmittel bei einer Temperatur von bis zu 150°C, bevorzugt zwischen 90 und 110°C, und einem Druck von bis zu 40 bar, bevorzugt zwischen 20 und 30 bar, durchgeführt.

Weiter ist der Reaktor vorzugsweise so gestaltet, dass die Bereiche, in denen technisch bedingt keine Durchmischung stattfinden kann, möglichst klein sind. Der Totvolumenanteil wird als Verhältnis aus dem Volumen unvermischter Bereiche V_{U} zum Gesamtvolumen V_{G} verstanden. Durch Berechnung kann ein kleinstmöglicher Totvolumenanteil für jede beliebige Reaktorgröße ermittelt werden. Dabei wird zugrundegelegt, dass die Mischwerkzeuge einen gewissen Mindestabstand zur Wand, einhalten müssen und zusätzlich im Bereich der eingebrachten Zerhacker nicht überstrichene Bereiche vorliegen, in denen keine Durchmischung stattfinden kann.

Überraschenderweise zeigte sich dabei, dass bei einem Volumen größer 25m³ sich durch ein Längen/Durchschnittsverhältnis (L/D) kleiner 2,5 ein kleinstmöglicher Totvolumenanteil realisieren lässt, mit der Folge, dass der unvermischte Anteil im Fertigprodukt entsprechend dieser Reduzierung abnimmt und die Produktqualität verbessert werden kann. Es zeigte sich dabei der Zusammenhang, dass bei einem L/D kleiner 2,5 das V_{U/}V_{G}-Verhältnis kleiner 0,007, z. B. zwischen 0,007 und 0,004 sein sollte.

In einer besonders bevorzugten Ausführung mit einem L/D von 2,35 werden MHAC Produkte von hoher Qualität dadurch erzielt, dass Totvolumenanteile minimiert werden, wobei der Reaktor mit an den Innenwänden angeordneten Zerhackern ausgestattet ist, eine zylinderförmige Geometrie aufweist und die Einlass- wie Auslassventile so angeordnet sind, dass eine vollständige Füllung und Entleerung erfolgt und die Geometrie der Wellen so gestaltet ist, dass an den Stirnflächen des Reaktors Produktanbackungen abgestreift werden.

Alternativ zu der beschriebenen Verfahrensweise wurde gefunden, dass der kontinuierliche Betrieb der Mahl- und Trocknungsanlage vorzugsweise durch zwei Pufferbehälter nach dem Reaktor aufrechterhalten werden kann, dadurch gekennzeichnet, dass die Behälter wechselweise zu befüllen und gleichfalls wechselweise zu entleeren sind, so dass ein kontinuierlicher Produktfluss gewährleistet bleibt.

Darüber hinaus wurde für Anlagen mit einer Kapazität größer 6000 jato gefunden, dass ein kontinuierlicher Produktstrom zur Versorgung der Mahl- und Trocknungseinheit durch das Einbringen zweier Reaktoren, die wechselweise betrieben werden, ermöglicht wird. Auf diese Weise sind separate Pufferbehälter entbehrlich.

Ein weiterer Gegenstand der Erfindung ist eine Vorrichtung zur Durchführung des betriebenen Verfahrens bzw. die Verwendung dieser Vorrichtung zur Durchführung dieses Verfahrens.

Erfindungsgemäß werden besonders faserfreie, klarlösliche Produkte in erhöhter Ausbeute erhalten. Ein weiterer Gegenstand der Erfindung sind daher nach den erfindungsgemäßen Verfahren erhältliche MHAC, die eine Klarlöslichkeit mit einer relativen Trübung kleiner 10 NTU aufweisen. Die Trübung wird dabei mit dem Trübungsmessgerät "Laboratory Turbidimeter Model 2100AN, Hach Company, Loveland, Colorado, U.S.A" gemessen. Unter NTU (Nephelometric Turbidity Units) ist hierbei ein relatives Streusignal zu verstehen. Je größer die Werte für dieses relative Streusignal NTU sind, desto trüber ist die Lösung und somit desto schlechter die Klarlöslichkeit des betreffenden Produktes.

### Beispiele:

### 1. Beispiel (L/D < 2,5)

Ein Reaktionsmischer mit einem Verhältnis L/D =1,5, der mit Pflugscharen als Mischelementen versehen ist, wird mit 67,92 kg gemahlenem Zellstoff (Ethenier F) gefüllt. Im Anschluss wird der Reaktor evakuiert und anschließend mit Stickstoff auf Normaldruck gebracht. Nun erfolgt die Zugabe von 150,4 kg einer 50 %igen Natronlauge. Nach der Alkalisierung werden 41,76 kg Propylenoxid zugegeben und im Anschluss 218,9 kg Chlormethan/Dimethylether-Gemisch mit einem Gehalt an Chlormethan von 52,6 % zudosiert.

Nach der Beendigung der Reaktion und Reinigung des Reaktionsproduktes erhält man eine Methylhydroxpropylcellulose mit einem durchschnittlichen Substitutionsgrad an Methyl von DS Methyl = 1,88 und einen molaren Substitutionsgrad MS _{Propoxyl} = 0,21. Die Messung der Trübung an einer 2 %igen Lösung mit dem "Laboratory Turbidimeter Model 2100AN, Hach Company, Loveland, Colorado, U.S.A "ergibt einen Wert von 6,14 NTU. Dieser Wert ist deutlich niedriger und somit besser als bei der Methylhydroxypropylcellulose, die im Beispiel 2 mit einem Reaktor mit einem L/D größer 2,5 hergestellt wurde.

### 2. Beispiel (L/D >2,5) Vergleichsbeispiel

In einem Reaktionsmischer mit einem Verhältnis L/D= 2,6 der mit Pflugscharen als Mischelementen versehen ist, wird mit 990 kg gemahlenem Zellstoff (Ethenier F) gefüllt. Im Anschluss wird der Reaktor evakuiert und danach mit Stickstoff auf Normaldruck gebracht. Nun erfolgt die Zugabe von 1505 kg einer 50 %igen Natronlauge. Nach der Alkalisierung werden 300 kg Propylenoxid zugegeben und im Anschluss werden 1861 kg Chlormethan/Dimethylether-Gemisch mit einem Anteil an 47 % Chlormethan zudosiert. Nach der Beendigung der Reaktion und Reinigung des Reaktionsproduktes erhält man eine Methylhydroxpropylcellulose mit einem durchschnittlichen Substitutionsgrad an Methyl von DS _{Methyl} = 1,98 und einem molaren Substitutionsgrad MS _{Propoxyl} = 0,28. Die Messung der Trübung an einer 2 %igen Lösung mit einem Gerät zur Messung der relativen Trübung ergibt einen Wert von 15,3 NTU. Dieser Wert ist deutlich schlechter als bei der Methylhydroxypropylcellulose, die im Beispiel 1 in einem Reaktor mit einem L/D von 1,5 hergestellt wurde. Das Produkt dieses Vergleichsbeispiels hat einen höheren Faseranteil im Vergleich zum erfindungsgemäßen Beispiel 1 und somit eine schlechtere Klarlöslichkeit.

## Patentansprüche

1. Verfahren zur industriellen Herstellung von Methylhydroxyalkylcellulosen (MHAC) durch Umsetzung von Zellstoff mit Alkalihydroxid und anschließender Umsetzung mit einem Alkylhalogenid und Hydroxyalkylierungsmittel, **dadurch gekennzeichnet, dass** die Reaktion batchweise in einem Reaktor mit einem L/D-Verhältnis kleiner 2,5 durchgeführt wird, in dem die nicht vermischten Bereiche minimiert sind und dem batchweise betriebenen Reaktor am Eintrag eine kontinuierlich betriebene Zellstoffmahlung vor- und am Austrag eine kontinuierlich laufende Anlage zur Mahlung und Trocknung der Produkte nachgeschaltet ist, wobei die Produktförderung unter Ausnutzung der Schwerkraft erfolgt.

2. Verfahren nach Anspruch 1 **dadurch gekennzeichnet, dass** der Reaktor einen Zwangsmischer mit Mischwerk mit mindestens einer horizontal angeordneten Welle aufweist, die beidseitig gelagert ist.

3. Verfahren nach Anspruch 1 bis 2, **dadurch gekennzeichnet, dass** die Welle beidseitig angetrieben ist.

4. Verfahren nach einem der Ansprüchen 1 bis 3, **dadurch gekennzeichnet, dass** der Reaktor zwei unmittelbar gegenüberliegende getrennte Wellen aufweist, die unabhängig voneinander mit unterschiedlicher Drehzahl, Drehrichtung und Geometrie betrieben werden können.

5. Verfahren nach einem der Ansprüche 1 bis 4, **dadurch gekennzeichnet, dass** der Reaktor
• eine zylinderförmige Geometrie aufweist und
• die Einlass- wie Auslassventile so angeordnet sind, dass eine vollständige Füllung und Entleerung erfolgt und
• die Geometrie der Wellen so gestaltet ist, dass an den Stirnflächen des Reaktors Produktanbackungen abgestreift werden und
• die Zerhacker in ihrer Anzahl und Anordnung zur Geometrie des mit Wellen bestückten Mischers passend angeordnet werden.

6. Verfahren nach einem der Ansprüche 1 bis 5, **dadurch gekennzeichnet, dass** der minimale Totvolumenanteil V_{U}/V_{G} < 0,007 ist.

7. Vorrichtung zur industriellen Herstellung von MHAC durch Umsetzung von Cellulose mit Alkalihydroxid und anschließender Umsetzung mit einem Alkylhalogenid und Hydroxyalkylierungsmittel, **dadurch gekennzeichnet, dass** die Vorrichtung einen Reaktor mit einem L/D-Verhältnis kleiner 2,5 aufweist.

8. Vorrichtung nach Anspruch 7, **dadurch gekennzeichnet, dass** der Reaktor einen Zwangsmischer mit Mischwerk mit mindestens einer horizontal angeordneten Welle aufweist, die beidseitig gelagert ist.

9. Vorrichtung nach Anspruch 8 **dadurch gekennzeichnet, dass** die Welle beidseitig angetrieben ist.

10. Vorrichtung nach einem der Ansprüche 7 bis 9 **dadurch gekennzeichnet, dass** der Reaktor zwei unmittelbar gegenüberliegende geteilte Wellen aufweist, die unabhängig voneinander mit unterschiedlicher Drehzahlen, Drehrichtung und Geometrie betrieben werden können.

11. Vorrichtung nach einem der Ansprüche 7 bis 10, **dadurch gekennzeichnet, dass** der Reaktor
• eine zylinderförmige Geometrie aufweist und
• die Einlass- wie Auslassventile so angeordnet sind, dass eine vollständige Füllung und Entleerung erfolgt und
• die Geometrie der Wellen so gestaltet ist, dass an den Stirnflächen des Reaktors Produktanbackungen abgestreift werden, und
• die Zerhacker in ihrer Anzahl und Anordnung zur Geometrie des mit Wellen bestückten Mischers passend angeordnet werden.

12. Vorrichtung nach einem der Ansprüche 7 bis 11, **dadurch gekennzeichnet, dass** der Reaktor einen Totvolumenanteil V_{U}/V_{G} kleiner 0,007 aufweist.

13. Verwendung einer Vorrichtung gemäß einem der Ansprüche 7 bis 11 zur Herstellung von Methylhydroxyalkylcellulose, **dadurch gekennzeichnet, dass** die Methylhydroxyalkylcellulose eine Klarlöslichkeit mit einer relativen Trübung kleiner 10 NTU aufweist.

14. Methylhydroxyalkylcellulose, erhältlich nach einen Verfahren gemäß einem der Ansprüche 1 bis 6, **dadurch gekennzeichnet, dass** die Methylhydroxyalkylcellulose eine Klarlöslichkeit mit einer relativen Trübung kleiner 10 NTU aufweist.

## Claims

1. Process for the industrial preparation of methylhydroxyalkylcelluloses (MHACs) by reaction of cellulose with alkali metal hydroxide and subsequent reaction with an alkyl halide and hydroxyalkylating agent, **characterized in that** the reaction is carried out batchwise in a reactor which has an L/D ratio of less than 2.5 and in which the unmixed regions are minimized and the batch reactor is preceded at the inlet by a continuously operated cellulose milling facility and is followed at the outlet by a continuously running plant for milling and drying the products, with the product being transported by action of gravity.

2. Process according to Claim 1, **characterized in that** the reactor has a mechanical mixer with mixing device having at least one horizontal shaft which is mounted at both ends.

3. Process according to Claim 1 or 2, **characterized in that** the shaft is driven at both ends.

4. Process according to any of Claims 1 to 3, **characterized in that** the reactor has two separate shafts which are located directly opposite one another and can be operated independently at different rotational speeds, directions of rotation and geometries.

5. Process according to any of Claims 1 to 4, **characterized in that** the reactor
• has a cylindrical geometry and
• the inlet and outlet valves are arranged so that complete filling and emptying occurs and
• the geometry of the shafts is such that caked product is scraped off at the end faces of the reactor and
• the number and arrangement of the choppers are matched to the geometry of the mixer equipped with shafts.

6. Process according to any of Claims 1 to 5, **characterized in that** the minimum dead volume fraction V_{U}/V_{T} is < 0.007.

7. Apparatus for the industrial preparation of MHACs by reaction of cellulose with alkali metal hydroxide and subsequent reaction with an alkyl halide and hydroxyalkylating agent, **characterized in that** the apparatus comprises a reactor having an L/D ratio of less than 2.5.

8. Apparatus according to Claim 7, **characterized in that** the reactor has a mechanical mixer with mixing device having at least one horizontal shaft which is mounted at both ends.

9. Apparatus according to Claim 8, **characterized in that** the shaft is driven at both ends.

10. Apparatus according to any of Claims 7 to 9, **characterized in that** the reactor has two separate shafts which are located directly opposite one another and can be operated independently at different rotational speeds, directions of rotation and geometries.

11. Apparatus according to any of Claims 7 to 10, **characterized in that** the reactor
• has a cylindrical geometry and
• the inlet and outlet valves are arranged so that complete filling and emptying occurs and
• the geometry of the shafts is such that caked product is scraped off at the end faces of the reactor and
• the number and arrangement of the choppers are matched to the geometry of the mixer equipped with shafts.

12. Apparatus according to any of Claims 7 to 11, **characterized in that** the reactor has a dead volume fraction V_{U}/V_{T} of less than 0.007.

13. Use of an apparatus according to any of Claims 7 to 11 for preparing methylhydroxyalkylcellulose, **characterized in that** the methylhydroxyalkylcellulose can be dissolved to give a clear solution having a relative turbidity of less than 10 NTU.

14. Methylhydroxyalkylcellulose obtainable by a process according to any of Claims 1 to 6, **characterized in that** the methylhydroxyalkylcellulose can be dissolved to give a clear solution having a relative turbidity of less than 10 NTU.

## Revendications

1. Procédé pour la préparation industrielle de méthylhydroxyalkylcelluloses (MHAC) par réaction de cellulose avec de l'hydroxyde alcalin et par réaction subséquente avec un halogénure d'alkyle et un agent d'hydroxyalkylation, **caractérisé en ce que** la réaction est réalisée de manière discontinue dans un réacteur avec un rapport L/D inférieur à 2,5, **en ce que** les domaines non mélangés sont minimisés et **en ce que** l'on raccorde en amont à l'entrée du réacteur fonctionnant en discontinu un broyage de cellulose fonctionnant en continu et on raccorde en aval à la sortie une installation fonctionnant en continu pour broyer et sécher les produits, le transport de produit étant réalisé en utilisant la force de gravité.

2. Procédé selon la revendication 1, **caractérisé en ce que** le réacteur présente un mélangeur à mélange forcé avec un outil de mélange ayant au moins un arbre disposé horizontalement, lequel est tourné sur paliers des deux côtés.

3. Procédé selon la revendication 1 à 2, **caractérisé en ce que** l'arbre est commandé des deux côtés.

4. Procédé selon l'une des revendications 1 à 3, **caractérisé en ce que** le réacteur présente deux arbres séparés directement opposés, qui peuvent fonctionner indépendamment l'un de l'autre avec différentes vitesse de rotation, direction de rotation et géométrie.

5. Procédé selon l'une quelconque des revendications 1 à 4, **caractérisé en ce que** le réacteur
• présente une géométrie en forme de cylindre et
• les vannes d'entrée ainsi que de sortie sont disposées, de telle sorte qu'un remplissage et un vidage complets sont réalisés, et
• la géométrie des arbres est conçue, de telle sorte que des dépôts de produit collés sur les surfaces d'arêtes du réacteur sont raclés et
• les broyeurs sont disposés sur le passage dans leur nombre et leur disposition par rapport à la géométrie du mélangeur garni d'arbres.

6. Procédé selon l'une quelconque des revendications 1 à 5, **caractérisé en ce que** la part de volume mort minimale V_{U}/V_{G} est < 0,007.

7. Dispositif pour la préparation industrielle de MHAC par réaction de cellulose avec de l'hydroxyde alcalin et par réaction subséquente avec un halogénure d'alkyle et un agent d'hydroxyalkylation, **caractérisé en ce que** le dispositif présente un réacteur avec un rapport L/D inférieur à 2,5.

8. Dispositif selon la revendication 7, **caractérisé en ce que** le réacteur présente un mélangeur à mélange forcé avec un outil de mélange ayant au moins un arbre disposé horizontalement qui est tourné sur paliers des deux côtés.

9. Dispositif selon la revendication 8, **caractérisé en ce que** l'arbre est commandé des deux côtés.

10. Dispositif selon l'une quelconque des revendications 7 à 9, **caractérisé en ce que** le réacteur présente deux arbres répartis directement de manière opposée qui peuvent fonctionner indépendamment l'un de l'autre avec différentes vitesse de rotation, direction de rotation et géométrie.

11. Dispositif selon l'une quelconque des revendications 7 à 10, **caractérisé en ce que** le réacteur
• présente une géométrie en forme de cylindre et
• les vannes d'entrée ainsi que de sortie sont disposées, de telle sorte qu'un remplissage et un vidage complets sont réalisés, et
• la géométrie des arbres est conçue, de telle sorte que des dépôts de produit collés sur les surfaces d'arêtes du réacteur sont raclés et
• les broyeurs sont disposés sur le passage dans leur nombre et leur disposition par rapport à la géométrie du mélangeur garni d'arbres.

12. Dispositif selon l'une quelconque des revendications 7 à 11, **caractérisé en ce que** le réacteur présente une part de volume mort Vᵤ/V_{G} inférieur à 0,007.

13. Utilisation d'un dispositif selon l'une quelconque des revendications 7 à 11 pour la préparation de méthylhydroxyalkylcelluloses, **caractérisé en ce que** la méthylhydroxyalkylcellulose présente une transparence en solution avec une turbidité relative inférieure à 10 NTU.

14. Méthylhydroxyalkylcellulose obtenue selon un procédé selon l'une quelconque des revendications 1 à 6, **caractérisée en ce que** la méthylhydroxyalkylcellulose présente une transparence en solution avec une turbidité relative inférieure à 10 NTU.
